Europäisches Patentamt

European Patent Office

Office européen des brevets

(11) Veröffentlichungsnummer: **0 276 675**
**A2**

## (12) EUROPÄISCHE PATENTANMELDUNG

(21) Anmeldenummer: **88100282.8**

(22) Anmeldetag: **12.01.88**

(51) Int. Cl.4: **C07B 59/00 , C07C 13/39**

(30) Priorität: **17.01.87 DE 3701302**

(43) Veröffentlichungstag der Anmeldung:
**03.08.88 Patentblatt 88/31**

(84) Benannte Vertragsstaaten:
**BE DE FR GB IT**

(71) Anmelder: **HOECHST AKTIENGESELLSCHAFT**
**Postfach 80 03 20**
**D-6230 Frankfurt am Main 80(DE)**

(72) Erfinder: **Wegener, Peter, Dr.**
**Am Eichkopf 4**
**D-6240 Königstein/Taunus(FR)**

(54) **Verfahren zur Herstellung von deuterierten organischen Verbindungen.**

(57) Das bisher bekannte Verfahren zur Herstellung deuterierter Acrylsäure-bzw. Methacrylsäure durch direktem Austausch von Wasserstoff durch Deuterium aus $D_2O$ in Gegenwart eines Katalysators ist zeitaufwendig und benötigt einen großen Überschuß an $D_2O$. Durch Verwendung von Hydrier-oder (De)-hydratisierungskatalysatoren auf Basis Palladium, Nickel und Kupfer und und hohe Reaktionstemperatur erhält man bei geringem Aufwand an $D_2O$ in sehr kurzer Reaktionszeit deuterierte Verbindungen in guter Ausbeute Das neue Verfahren ist auch für leicht polymerisierende Monomere anwendbar, ohne daß ein Polymerisationsinhibitor zugegen sein muß.

EP 0 276 675 A2

## Verfahren zur Herstellung von deuterierten organischen Verbindungen

Die Erfindung bezieht sich auf ein Verfahren zum katalytischen Austausch von Wasserstoff gegen Deuterium in ungesättigten, organischen Verbindungen mittels Deuteriumoxid, sowie bestimmte, mittels dieses Verfahrens herstellbare Verbindungen.

Es ist bekannt, daß ein direkter Austausch von Wasserstoff gegen Deuterium aus Deuteriumoxid in Methylacrylat oder Methylmethacrylate unter katalytischer Wirkung eines Elementes der Platingruppe möglich ist (vgl. EP-A 186 106). Der Austausch erfolgt bei einer Temperatur von vorzugsweise 50 bis 150°C in der Flüssigphase innerhalb 16 bis 62 Stunden unter Zusatz von Polymerisationsinhibitoren und ergibt bei einem 24-fachen molaren Überschuß an Deuteriumoxid bei Methylmethacrylat einen Deuterierungsgrad von 58 %.

Es bestand nun die Aufgabe, eine schnellere und damit wirtschaftlichere Methode zur Deuterierung zu finden. Dieses Verfahren sollte unter Verwendung möglichst billigerer Katalysatoren durchgeführt werden können.

Es wurde nun gefunden, daß die Aufgabe gelöst werden kann, wenn die Deuterierung in der Flüssigphase oder der Gasphase bei einer Temperatur von mehr als 150 °C in Gegenwart eines Metalls, einer Metallegierung oder eines Trägerkatalysators durchgeführt wird.

Somit betrifft die Erfindung ein Verfahren zur Herstellung von deuterierten organischen Verbindungen durch Austausch des Wasserstoffs gegen Deuterium in der Flüssigphase oder Gasphase, in Gegenwart eines Katalysators, dadurch gekennzeichnet, daß der Austausch bei einer Temperatur von 150 bis 350 °C mittels $D_2O$ in Gegenwart eines Metall-oder Metall-Trägerkatalysators auf Basis eines Metalls, welches (De)hydratisierungen oder Hydrierungen zu katalysieren vermag, durchgeführt wird.

Weiterhin betrifft die Erfindung die nach diesem Verfahren hergestellten deuterierten Verbindung.

Das erfindungsgemäße Verfahren wird in der Weise durchgeführt, daß die zu deuterierende Verbindung zusammen mit Deuteriumoxid mit dem Katalysator in Berührung gebracht wird. Diese geschieht in der Flüssigphase oder der Gasphase, vorzugsweise in der Gasphase. Die Reaktionspartner werden entweder in einem Reaktionskessel zusammengebracht oder durch ein beheiztes Rohr geleitet, wobei der Katalysator im Reaktionsansatz verteilt sein kann oder als feste stationäre Phase im Reaktionsgefäß oder -rohr angeordnet sein kann. Die Reaktionstemperatur beträgt 150 bis 350 °C, vorzugsweise 200 bis 300 °C.

Der erfindungsgemäß zu verwendende Katalysator ist ein Metall, eine Metallagierung oder ein Trägerkatalysator, bei welchem ein Metall auf einem Träger abgeschieden ist. Geeignet sind Metalle, welche (De)hydratisierungen oder Hydrierungen zu katalysieren vermögen, beispielsweise Palladium, Nickel, Kupfer und Kupferchromit und als Träger $SiO_2$, Ruß, Aktivkohle und Silikate. Als Metallegierung ist beispielsweise Messing geeignet.

Hergestellt werden können die Träger-katalysatoren beispielsweise durch Tränken des Trägers mit einer Lösung eines Metallsalzes, Trocknen des Feststoffes und Reduktion des auf dem Träger fixierten Metallsalzes zum Metall. Derartige Trägerkatalysatoren für Hydrierzwecke sind auch im Handel und können käuflich erworben werden.

Die Verweilzeit bei der Reaktionstemperatur beträgt 5 bis 120 sec., vorzugsweise 10 bis 20 sec.

Als Deuterierungsmittel wird $D_2O$ verwendet, welches die preiswerteste Deuteriumquelle darstellt une einfach zu handhaben ist.

Das erfindungsgemäße Verfahren ist einfach und schnell durchführbar. Es ist auch anwendbar für leicht polymerisierbare Verbindungen, beispielsweise Styrol, Acryl-und Methacrylsäure und deren Ester, oder Vinylacetat, welche bei den hohen Reaktionstemperaturen weder polymerisieren noch, im Falle der Ester, hydrolysieren. Somit ist die Anwesenheit eines Polymerisationinhibitors nicht erforderlich. Die deuterierten Verbindungen werden in hoher Ausbeute erhalten.

Da bei jeder Reaktion am Katalysator unter den Reaktionsbedingungen eine annähernde Gleichverteilung aller Wasserstoff-und Deuterium-Atome über die Summe dieser Atome in der zu deuterierenden Verbindung und Wasser erfolgt, erhält man so einerseits teilweise deuterierte Verbindung, andererseits an Deuterium abgereichertes Wasser. Durch mehrfach wiederholte Umsetzung dieses an Deuterium abgereicherten Wasers mit frischer, undeuterierter organischer Verbindung kann der Deuteriumgehalt des schweren Wasser weitgehend ausgenutzt werden.

Umgekehrt kann schwach deuterierte organische Verbindung weiter mit hochprozentigem $D_2O$ hoch deuteriert werden.

Somit gelingt es, das Deuterium zu über 90 % aus dem $D_2O$ in die organische Verbindung zu transferieren.

Vorzugsweise werden (Meth)acrylsäure, deren Ester, sowie Bicyclo-2.2.1-heptan-2, Dicylo-2.2.1-heptadien-2,5, Phenol, Styrol und seine Derivate, und fluorierte Alkohole, beipielsweise Hexafluorisopropanol eingesetzt.

Deuterierte Acrylsäure und Methacrylsäure sowie ihre Ester mit ganz oder teilweise deuterierten Alkoholen haben große Bedeutung als Monomere für amorphe Polymere, die zu transparenten Materialien, inbesondere Lichtwellenleitern,verarbeitet werden können.

Die nachfolgenden Beispiele sollen die Erfindung verdeutlichen.

## Beispiele 1 bis 15

Alle Versuche wurden in der folgenden Weise durchgeführt:

Ein elektrisch beheizbares Glasrohr von 30 cm Länge und 1 cm Durchmesser wurde auf 25 cm Länge mit dem Katalysator gefüllt und die Substanz gelöst oder suspendiert in $D_2O$ durch das Rohr geleitet und danach in einer Kühlfalle gesammelt.

Eingesetzt wurden jeweils gleiche Volumina an zu deuterierenden Verbindungen und $D_2O$, d.h. zum Beispiel bei Methyl-Methacrylat (= MMA) ein 5,85 facher molarer Überschuß an $D_2O$, bei Norbornadien (= NBD) ein 5,67 facher molarer Überschuß, bei Methacrylsäure (= MA) ein 4,7 facher Überschuß. Die Verweilzeit betrug bei allen Versuchen 20 sec.

MA und Phenol wurden durch Extraktion mit Diethylether aus der Reaktionslösung abgetrennt. Der Deuterierungsgrad wurde in allen Fällen massenspektrometrisch durch Vergleich mit den entsprechenden undeuterierten Verbindungen bestimmt, korrigiert um den C-13-Gehalt.

Aus der Tabelle folgt, daß besonders Pd/C und $Ni/SiO_2$ gute Austauschraten geben.

Der Deuterierungsgrad gibt den prozentuaien Anteil der durch Deuterium ersetzten Wasserstoffatome in der jeweiligen Verbindung an, der theoretische Deuterierungsgrad den maximal möglichem Deuteriumgehalt entsprechend dem Molverhältnis an $D_2O$.

| Vers.Nr. | Ausgangs-substanz | Katalysator | Temp. $^\circ$C | Ausbeute % | Molverh. $D_2O$/Ausgangs-subst. | Deutierungsgrad gefd. % | theor. % |
|---|---|---|---|---|---|---|---|
| 1 | MMA | 55% $Ni/SiO_2$ | 200 | 70 | 5,8 | 40 | 59 |
| 2 | " | 12% $Ni/SiO_2$ | 250 | 75 | | 41 | |
| 3 | " | 30% Cu/Träger | 250 | 75 | | 13 | |
| 4 | Methacrylsre. | 12% $Ni/SiO_2$ | 250 | 82 | 4,7 | 27 | 61 |
| 5 | " | 5% Pd/C | 350 | 50 | | 58 | |
| 6 | " | 5% Pd/Asbest | 250 | 88 | | 30 | |
| 7 | Styrol | 12% $Ni/SiO_2$ | 250 | 85 | 6,3 | 12 | 61 |
| 8 | " | 30% Cu/Träger | 250 | 100 | | 9 | |

| Vers.Nr. | Ausgangs-substanz | Katalysator | Temp. °C | Ausbeute % | Molverh. $D_2O$/Aus-gangs-subst. | Deutierungsgrad | |
|---|---|---|---|---|---|---|---|
| | | | | | | gefd. % | theor. % |
| 9 | Phenol | 1% Pd/Molsieb | 300 | 100 | 4,8 | 39 | 61 |
| 10 | Norbornadien[1] | 12% Ni/$SiO_2$ | 250 | 90 | 5,6 | 35 | 58 |
| 11 | " | 32% Cu; 30% Cr | 250 | 90 | | 18 | |
| 12 | Cyannorbor-nadien | 5% Pd/C | 350 | 50 | 6,9 | 36 | 60 |
| 13 | $(CF_3)_2CH-OH$ | " | 250 | 90 | 5,8 | 5 | 85 |
| 14 | Acrylsäure | " | 250 | 80 | 3,7 | 37 | 65 |
| 15 | " | " | 350 | 70 | | 63 | |

---

[1] Bicyclo-2.2.1-heptadien-2,5

0 276 675

**Ansprüche**

1. Verfahren zur Herstellung von deuterierten organischen Verbindungen durch Austausch des Wasserstoffs gegen Deuterium in der Flüssigphase oder Gasphase, in Gegenwart eines Katalysators, dadurch gekennzeichnet, daß der Austausch bei einer Temperatur von 150 bis 350 °C mittels $D_2O$ in Gegenwart eines Metall-oder Metallträgerkatalysators auf Basis eines Metalls, welches Hydrierungen oder (De)hydratisierungen zu katalysieren vermag, durchgeführt wird.

2. Verfahren nach Anspruch 1, dadurch gekennzeichnet, daß der Austausch in der Gasphase bei 200 bis 300 °C durchgeführt wird.

3. Verfahren nach Anspruch 1, dadurch gekennzeichnet, daß der Austausch in Gegenwart eines Trägerkatalysators auf Basis Palladium, Nickel, Kupfer oder Kupfer-Chromoxid durchgeführt wird.

4. Verfahren nach Anspruch 1, dadurch gekennzeichnet, daß Acrylsäure, Methacrylsäure, deren Ester, Bicyclohepten, Bicycloheptadien, Phenol, Stryol und seine Derivate, sowie fluorierte Alkohole deuteriert werden.

5. Bicyclohepten-D

6. Bicycloheptadien-D